# DEMANDE DE BREVET EUROPEEN

(11) **EP 2 256 585 A1**
(43) Date de publication de la demande: **01.12.2010**
(21) Numéro de dépôt: 10162962.4
(22) Date de dépôt: 17.05.2010
(51) Int. Cl.: G06F 1/18

(54) **Système mobile de traitement d'informations pour la saisie et/ou la consultation de données.**

(30) Priorité: 18.05.2009 FR 0953260
(71) Demandeur: Tactys, 76130 Mont Saint Aignan (FR)
(72) Inventeur: Rondeau, Patrick, 76130, Mont Saint Aignan (FR); Mauger, Jean-Michel, 92140, Clamart (FR)
(74) Mandataire: Pontet, Bernard

(57) **Abrégé**

L'invention concerne un système mobile (10,40,60,70) de traitement d'informations pour la saisie et/ou la consultation de données, destiné à être utilisé dans un milieu répondant à des normes d'hygiène ou de contamination, ledit système (10,40,60,70) comprenant :
- des moyens d'affichage (13 ;74,75),
- des moyens de saisie (14),
- des moyens de traitement de données,
ledit système (10,40,60,70) étant **caractérisé en ce que** les moyens de traitement de données sont disposés dans un boîtier monobloc étanche (12).

## Description

La présente invention concerne un système mobile de traitement d'informations pour la saisie et/ou la consultation de données.

Le domaine de l'invention est le domaine des systèmes mobiles de traitement d'informations, et plus particulièrement, le domaine des systèmes mobiles de traitement d'informations destiné, à être utilisé, dans un milieu répondant à des normes d'hygiène ou de contamination.

Actuellement, il existe de nombreux systèmes mobiles de traitement d'informations tels que les systèmes commercialisés par Ergotron, FLO, Advantech® ou IPO® et destinés à une utilisation médicale.

Ces systèmes se présentent, la plupart du temps, sous la forme d'un chariot comportant un mat vertical disposé sur roues. Le chariot comporte, en général, un plan de travail sur lequel est posé un écran d'ordinateur ordinaire, relié à une unité centrale disposé soit dans une cavité formée sous le plan de travail soit sensiblement au pied du mat vertical.

Les chariots existants peuvent en outre comporter une ou plusieurs tablettes, éventuellement sur glissières, utilisées pour poser des moyens de saisie tels qu'un clavier ordinaire ou une souris ordinaire ou encore un périphérique informatique tel que par exemple une imprimante.

La connexion entre les différents éléments d'un tel chariot médical se fait par des câbles disposés librement le long du mat vertical et traversant les différentes tablettes, le plan de travail ou encore la cavité comportant l'unité centrale par des ouvertures formées sur ces éléments.

Cependant, les chariots médicaux actuels présentent l'inconvénient majeur de ne pas pouvoir être nettoyés facilement, alors qu'ils sont précisément utilisés dans un milieu nécessitant de répondre à des normes d'hygiène précises.

Par ailleurs, les chariots médicaux actuels présentent une multitude d'ouvertures ou de recoins qui représentent des nids à microbes. De plus, lorsque ces ouvertures sont disposées près d'une source de chaleur, par exemple des ouvertures de dissipation de chaleur ou d'aération présentes sur une unité centrale ordinaire, le développement des microbes peut être accéléré.

Ainsi, dans un environnement répondant à des normes d'hygiène ou de contamination, par exemple médical, les chariots médicaux actuels peuvent constituer un vecteur d'infections, par exemple nosocomiales ou hospitalières, et participer au développement de ces infections.

Un but de la présente invention est de remédier aux inconvénients précités.

Un autre but de l'invention est de proposer un système mobile de traitement d'informations pour la saisie et/ou la consultation de données plus adapté à une utilisation dans un milieu répondant à des normes d'hygiène ou de contamination.

Enfin, un autre but de la présente invention est de proposer un système mobile de traitement d'informations pour la saisie et/ou la consultation de données plus facile à nettoyer que les systèmes actuels.

L'invention permet d'atteindre ces buts par un système mobile de traitement d'informations pour la saisie et/ou la consultation de données, destiné à être utilisé dans un milieu répondant à des normes d'hygiène et/ou de contamination, ledit système comprenant :
- des moyens d'affichage,
- des moyens de saisie,
- des moyens de traitement de données,
ledit système étant **caractérisé en ce que** les moyens de traitement de données sont disposés dans un boîtier monobloc étanche.

Dans présente invention, « un boîtier monobloc étanche » désigne un boîtier monobloc qui ne comporte aucune ouverture perméable à l'eau.

Ainsi, le système selon l'invention présente, au moins au niveau des moyens de traitement de données, une étanchéité permettant un nettoyage par aspersion de produits, voire même à grande eau. Un tel nettoyage est plus facile et plus rapide à mettre en oeuvre que le nettoyage des systèmes de l'état de la technique.

Par ailleurs, une possibilité de nettoyage par aspersion de produits, voire même à grande eau, permet d'atteindre les moindres recoins et ouvertures et un nettoyage plus complet et plus efficace contre les infections ou contaminations comparé aux systèmes de l'état de la technique.

Avantageusement, le boîtier monobloc étanche peut comporter au moins une paroi réalisant une dissipation de la chaleur depuis l'intérieur dudit boîtier vers l'extérieur. Ainsi, contrairement aux systèmes de l'état de la technique, la chaleur générée par les moyens de traitement de données, par exemple un ou plusieurs processeurs, est évacuée par une ou plusieurs parois réalisant un échange thermique avec l'extérieure et non par une ou plusieurs ouverture réalisées sur le boîtier. Une telle dissipation de chaleur permet d'une part, d'éviter de réaliser une ou plusieurs ouvertures qui représenteraient des vecteurs de contamination, et d'autre part, d'éviter une architecture complexe pour la dissipation de la chaleur.

Selon une version particulière du système selon l'invention, les éléments générateurs de chaleur peuvent être fixés directement contre au moins une paroi de dissipation de chaleur. La dissipation thermique peut ainsi être intégrée et améliorée. Cette solution présente un mode de réalisation avantageux dans le fait que les échanges thermiques s'opèrent par conduction entre les éléments dissipatifs et la paroi de dissipation puis par convection naturelle entre la paroi de dissipation et l'air ambiant.

Dans un mode de réalisation, le boîtier monobloc étanche peut en outre comporter au moins un moyen de ventilation réalisant la circulation d'au moins une partie de la chaleur à l'intérieur dudit boîtier vers au moins une paroi dudit boîtier réalisant une dissipation de ladite chaleur vers l'extérieur. Ainsi, le moyen de ventilation permet de diriger la chaleur à dissiper vers une paroi de dissipation.

Dans le cas ou le boîtier comporte plusieurs parois de dissipation de chaleur, le moyen de ventilation permet de répartir la chaleur à dissiper entre les différentes parois, ce qui améliore la dissipation de la chaleur depuis l'intérieur du boîtier monobloc étanche vers l'extérieur.

Dans un premier mode de réalisation particulièrement avantageux, les moyens d'affichages peuvent être intégrés dans une paroi externe du boîtier monobloc de sorte que l'ensemble boîtier monobloc + moyen d'affichage forme un ensemble monobloc étanche.

Toujours, dans ce mode de réalisation, le moyen d'affichage peut constituer une partie ou la totalité de la face avant du boîtier monobloc.

Ainsi, dans ce mode de réalisation, l'ensemble (moyens de traitement de données + moyens d'affichage) constitue un boîtier monobloc étanche ou un ensemble monobloc étanche qui peut être nettoyé par aspersion, voire à grande eau, augmentant la facilité et l'efficacité du nettoyage du système selon l'invention.

De plus, toujours dans ce mode de réalisation, les connexions entre les moyens d'affichage et les moyens de traitement de données peuvent être réalisées à l'intérieur du boîtier monobloc étanche. Une telle configuration permet d'éviter de diminuer le nombre de connexions externes sous forme de câbles représentant une source de difficulté lors du nettoyage.

Selon un deuxième mode de réalisation, qui peut être combiné au premier mode de réalisation, les moyens d'affichage et les moyens de saisie forment un ensemble monobloc étanche, augmentant la facilité et l'efficacité de nettoyage du système selon l'invention.

Ainsi, en combinant le premier et le deuxième mode de réalisation, l'ensemble (moyens de traitement de données + moyens d'affichage + moyens de saisie de données) peut se présenter sous la forme d'un ensemble monobloc étanche, diminuant le nombre de connexions externes et augmentant la facilité et l'efficacité de nettoyage du système selon l'invention.

Selon une première version, les moyens d'affichage peuvent comprendre un écran plat LCD, ou tout autre écran équivalent. L'écran en question peut en outre être un écran tactile.

Un tel écran peut comporter une couche de protection étanche protégeant l'écran. Un tel écran est facile à nettoyer.

Selon une deuxième version, les moyens d'affichage peuvent comprendre un écran de projection sur lequel sont projetées les images à afficher.

Le système selon l'invention peut en outre comprendre un mât incliné étanche auquel est fixé :
- le boîtier monobloc,
- les moyens de saisie, et/ou
- les moyens d'affichage ;
que ces moyens se présentent ou non sous la forme d'un ensemble monobloc étanche tel que décrit plus haut.

Les moyens d'affichage sont disposés au niveau de la partie supérieure du mât incliné. Ainsi, Le mât incliné présente l'avantage d'éloigner les moyens d'affichage de l'utilisateur et donc de respecter une distance d'utilisation recommandée tout en gardant les moyens de saisie près de l'utilisateur.

Avantageusement, le mât incliné peut en outre être agencé pour recevoir en interne des câbles de connexion électrique entre des moyens de stockage d'énergie électrique disposés sensiblement au pied du mat et le boîtier monobloc étanche, et éventuellement les moyens d'affichage et/ou les moyens de saisie.

Dans un troisième mode de réalisation, au moins une partie du mât incliné peut en outre former au moins une partie du boîtier étanche.

Plus particulièrement, les moyens de traitement de données peuvent être disposés dans au moins une partie du mât incliné, qui peut être creuse, cette partie du mât formant un boîtier étanche. Cette partie du mât peut en outre comporter une ou plusieurs parois réalisant un échange thermique avec l'extérieure dissipant ainsi la chaleur générée par les moyens de traitement de données. Cette partie du mât peut, par exemple, être la partie centrale ou la partie basse du mât incliné.

Bien entendu, ce troisième mode de réalisation peut être combiné avec le premier et le deuxième mode de réalisation.

Avantageusement, le boîtier monobloc étanche comporte au moins un port de connexion étanche, par exemple conforme à la norme d'étanchéité IP68, ledit au moins un port de connexion servant à la connexion avec :
- les moyens de saisie,
- les moyens d'affichage,
- des moyens de stockage d'énergie, et/ou
- d'un appareil externe.

Ainsi, même les ports de connexion éventuellement disposés sur le boîtier monobloc sont étanches.

Le système selon l'invention peut avantageusement comprendre un plan de travail.

Au moins une partie des moyens de saisie peut être intégrée audit plan de travail. Plus particulièrement, les moyens de saisie peuvent être intégrés dans l'épaisseur du plan de travail.

Par ailleurs, le plan de travail, les moyens d'affichage et les moyens de traitement de données peuvent se présenter sous la forme d'un ensemble monobloc étanche.

Les moyens de saisie peuvent comprendre un clavier tactile.

Ce clavier tactile peut être un clavier tactile comportant des touches à sensibilité capacitive.

Par ailleurs, le clavier tactile peut être réalisé en verre trempé, ou intégré dans l'épaisseur d'un plan de travail en verre trempé, résistant, lisse et facile à nettoyer.

Le système selon l'invention peut en outre comprendre au moins une batterie alimentant les différents éléments dudit système. La batterie peut être disposée au niveau de la partie inférieur du système.

Le système peut en outre comprendre un indicateur de l'état de charge de la ou des batteries.

La batterie peut être contenue dans un coffret totalement étanche et amovible pour être chargée séparément du reste du système.

Le système selon l'invention peut être utilisé sur un site médical.

Le système selon l'invention peut en outre être utilisé dans une salle blanche.

D'autres avantages et caractéristiques de l'invention apparaîtront à l'examen de la description détaillée d'un mode de mise en oeuvre nullement limitatif, et des dessins annexés sur lesquels :
- les figures 1, 2 et 3 sont des représentations schématiques d'un mode de réalisation particulier d'un système selon l'invention dans lequel les moyens de saisie sont intégrés dans un plan de travail ;
- les figures 4 et 5 sont des représentations schématiques d'un autre mode de réalisation particulier d'un système selon l'invention dans lequel les moyens de saisie ne sont pas intégrés dans le plan de travail ;
- les figures 6 et 7 sont des représentations schématiques de deux autres modes de réalisation particuliers d'un système selon l'invention ; et
- la figure 8 est une représentation schématique de la partie basse d'un système selon l'invention.

Sur les figures, les éléments communs à plusieurs figures conservent les mêmes références.

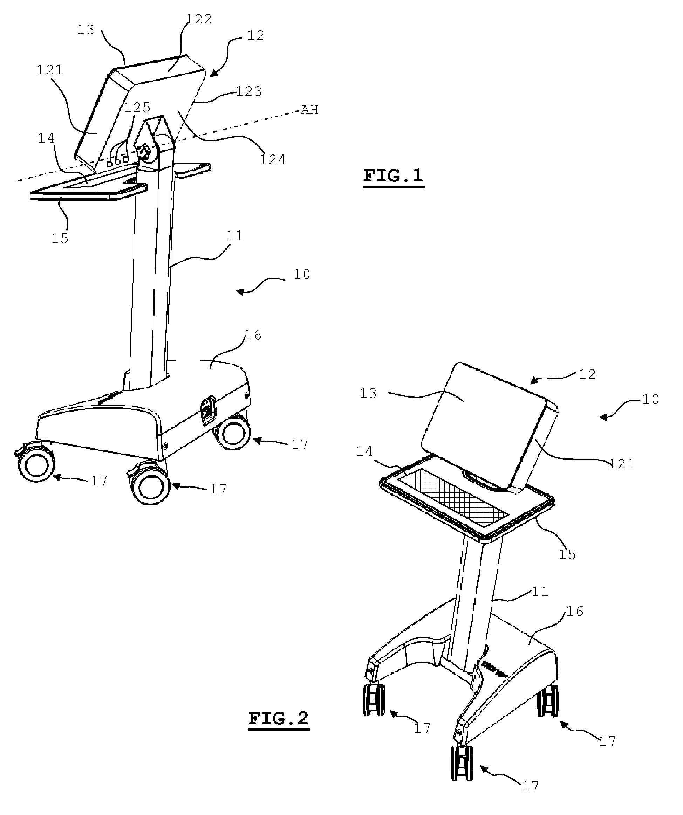

La figure 1 est une représentation schématique selon une vue de derrière d'un mode de réalisation particulier d'un système mobile 10 selon l'invention.

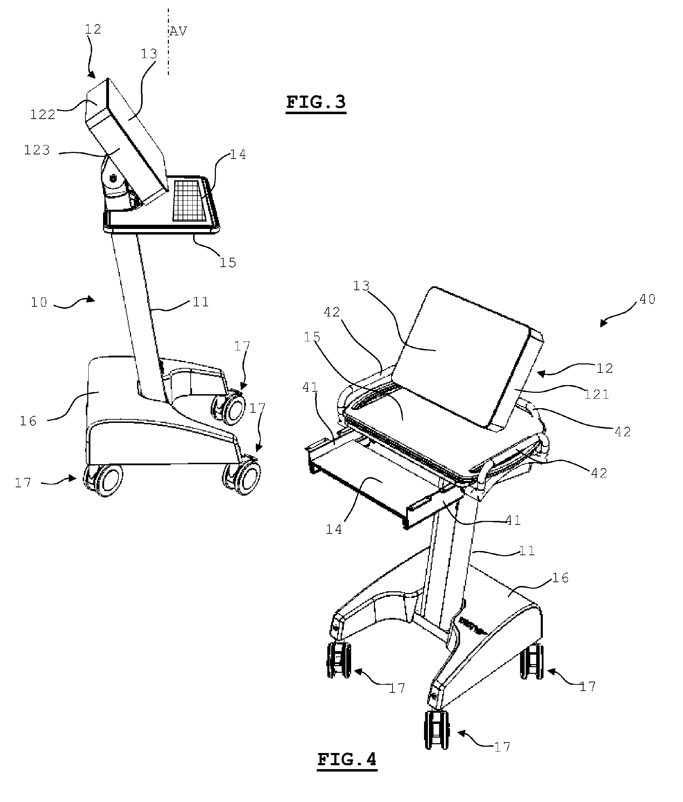

La figure 2 est une représentation schématique selon une vue de devant du système 10 et la figure 3 une représentation schématique selon une vue de côté du système 10 de la figure 1.

Le système 10 comprend un mât incliné 11 sur lequel sont disposés un boîtier monobloc étanche 12 comprenant des moyens de traitement de données, un écran d'affichage 13, un clavier tactile 14 intégré dans un plan de travail 15. Le système 10 comporte également une batterie disposée au niveau de la partie basse du mât incliné 11 sous le capot inférieur 16 étanche. Le mât 11 est creux et est disposé sur des moyens de roulement 17.

Lorsque l'utilisateur est dirigé vers l'écran d'affichage 13, le mât 11 est incliné vers l'arrière par rapport à l'axe vertical AV.

Dans l'exemple représenté, l'écran d'affichage 13 est intégré à la face avant du boîtier 12 de manière étanche. Les connexions entre les moyens de traitement de données et l'écran d'affichage 13 sont des connexions internes au boîtier 12. L'écran d'affichage 13 utilisé est un écran LCD disposé derrière une couche protectrice étanche et rigide, par exemple en verre. Cette couche protectrice est parfaitement lisse et facile à nettoyer, par exemple par aspersion de produits liquides ou même à grande eau.

L'écran d'affichage 13 peut également comprendre des touches à sensibilité capacitive placées derrière la couche protectrice étanche et rigide.

Le clavier 14 est un clavier tactile, à sensibilité capacitive et intégré dans l'épaisseur du plan de travail 15. Le clavier 14 peut être un clavier sans fil.

Le plan de travail 15 est réalisé en un matériau transparent, rigide, étanche et parfaitement lisse tel que par exemple du verre trempé.

Le boîtier monobloc étanche 12 comprend les moyens de traitement de données. Le boîtier 12 comporte également un ventilateur interne (non représenté) permettant de faire circuler la chaleur générée par les moyens de traitement de données vers les parois latérales 121-123 et vers la paroi arrière 124 du boîtier 12 qui dissipent la chaleur interne au boîtier 12 vers l'extérieur. Les parois 121-124 sont réalisées en un matériau permettant un échange thermique avec l'extérieur, tel que par exemple de l'acier inoxydable ou l'aluminium...

Le boîtier monobloc 12 ne comporte aucune ouverture qui ne soit pas étanche. Il comporte des ports de connexion IP68 125 permettant une connexion USB avec le clavier 14 lorsque le clavier n'est pas un clavier sans fil : dans ce cas le clavier 14 comporte également un tel port de connexion (non représenté) au niveau du plan de travail 15. Les ports de connexion 125 permettent également une connexion avec un périphérique externe quelconque tel que par exemple une imprimante.

Les ports de connexion 125 permettent également une connexion du boîtier 12 avec une source d'énergie électrique, alimentant les moyens de traitement de données et l'écran 13, et disposée sous le capot inférieure 16 étanche. Dans ce cas, le ou les fils de connexion entre la source d'énergie et le boîtier 12 circulent à l'intérieur du mât incliné creux 11. Ce mât comporte une ouverture au niveau de sa partie inférieure et une ouverture au niveau de sa partie supérieure, permettant le passage de câbles, ces ouvertures étant parfaitement étanches.

Dans l'exemple représenté sur les figures 1-3, les moyens de traitement de données sont intégrés dans un boîtier monobloc 12 parfaitement étanche, lequel boîtier intègre également l'écran d'affichage 13 sur sa face avant de manière parfaitement étanche. Ainsi, les moyens d'affichage 13 et le boîtier monobloc 12 forme un ensemble monobloc étanche facile à nettoyer.

L'inclinaison du boîtier monobloc 12 intégrant les moyens de traitement de données et l'écran d'affichage est réglable autour d'un axe horizontal AH.

L'ensemble du système 10 présente une étanchéité répondant à la norme IP65.

La figure 4 est une représentation schématique d'un autre mode de réalisation d'un système mobile 40 selon l'invention. Les éléments communs aux systèmes 10 et 40 portent les mêmes références et le système 40 présente sensiblement les mêmes caractéristiques que le système 10 sauf en ce qui concerne les moyens de saisie, c'est-à-dire le clavier 14.

En effet, dans le système 40 le clavier 14 n'est pas intégré dans le plan de travail 15, mais il est disposé sous le plan de travail 15, sur des glissières 41 permettant à l'utilisateur de ranger le clavier 14 sous le plan de travail 15 et de le sortir lors de son utilisation tel que représenté sur la figure 4.

Par ailleurs, le système 40 comporte des poignées 42 disposées sur les côtés et à l'arrière du plan de travail 15. Ces poignées 42 permettent à l'utilisateur de manipuler et de déplacer le système 40.

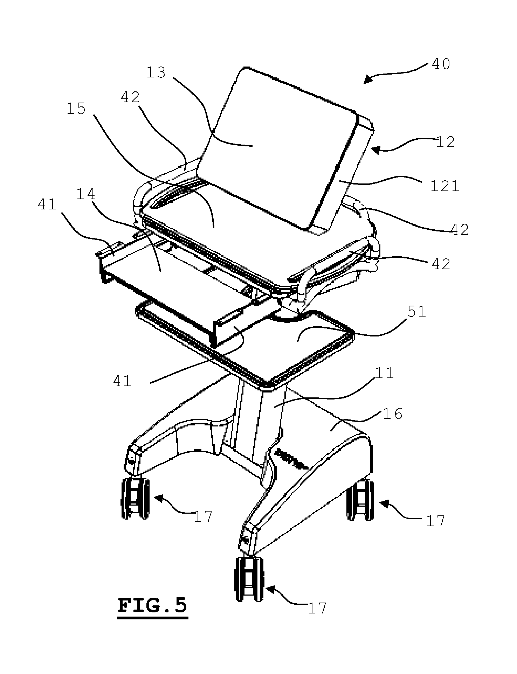

La figure 5 est une représentation du système mobile 40 selon l'invention avec en plus une tablette 51 disposée à peu près à mi-hauteur sur le mât incliné, creux et étanche 11. Cette tablette est une tablette étanche, réalisé en un matériau, résistant et parfaitement lisse.

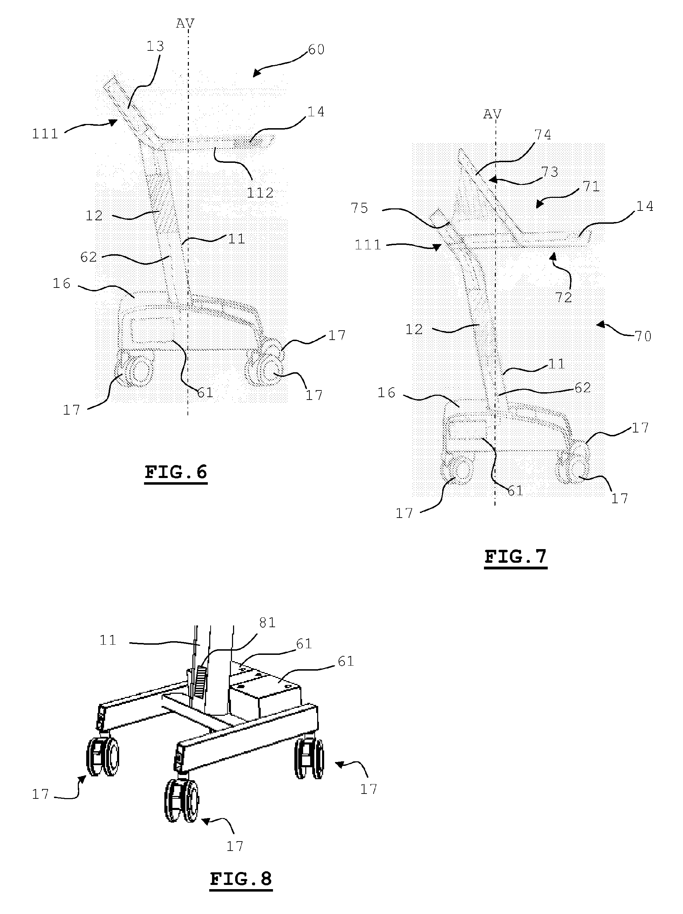

La figure 6 est une représentation schématique d'un autre mode de réalisation d'un système mobile selon l'invention.

Dans le système mobile 60 représenté sur la figure 6, le boîtier monobloc étanche 12, comportant les moyens de traitement de données, est disposé à l'intérieur du mât incliné 11 creux et étanche. Le mât incliné 11 comporte au niveau du boîtier 12 au moins une paroi permettant un échange thermique avec l'extérieur et réalisant une dissipation de la chaleur générée par les moyens de traitement thermique.

Le mât incliné 11 comporte en sa partie supérieure, une première partie 111 présentant une inclinaison plus forte que le mât incliné vers l'arrière par rapport à l'axe verticale AV. Cette partie 111 présente une largeur plus importante par rapport au reste du mât incliné 11.

L'écran d'affichage 13 est intégré sur la face avant de cette partie 111 du mât 11, c'est-à-dire la face dirigée vers l'utilisateur. L'intégration de l'écran sur la partie 111 du mat 11 est réalisée de manière lisse et étanche, par exemple par utilisation de moyens de collage étanche. Les connexions entre l'écran d'affichage 13 et le boîtier 12 se font à l'intérieur du mât creux 11.

Par ailleurs, en sa partie supérieure, le mât incliné 11 comporte une deuxième partie 112 sensiblement horizontale et revenant vers l'utilisateur. Cette partie 112 présente une largeur plus importante par rapport au reste du mât incliné 11. Le clavier 14 est intégré sur la face supérieure de cette partie 112 du mât incliné 11, c'est-à-dire la face dirigée vers l'utilisateur. L'intégration du clavier 14 sur la partie 112 du mât 11 est réalisée de manière lisse et étanche, par exemple par utilisation de moyens de collage étanche. Les connexions entre le clavier 14 et le boîtier 12 se font à l'intérieur du mât creux 11.

Ainsi, sur le système 60 représenté sur la figure 6, le boîtier 12 (comportant les moyens de traitement de données), l'écran d'affichage 13 et le clavier 14 sont intégrés au mât creux 11. L'ensemble mât incliné 11 + moyens de traitement de données intégrés dans le boîtier étanche 12 + écran 13 + clavier 14 composent un ensemble monobloc étanche, ce qui facilite et améliore le nettoyage de cet ensemble et donc du système 60. Par ailleurs, les connexions entre le boîtier 12 et l'écran d'affichage 13 et le clavier 14 se font entièrement par des câbles circulant à l'intérieur du mat creux 11, ce qui facilite et améliore encore plus le nettoyage du système 60.

Le système 60 comporte en outre une ou plusieurs batteries 61 disposées au pied du mât creux 11 sous le capot étanche et lisse 16. La connexion entre le boîtier 12 et la batterie 61 se fait par un câble d'alimentation 62 circulant à l'intérieur du mat creux 11.

La figure 7 est une représentation schématique d'un autre mode de réalisation d'un système mobile selon l'invention.

Dans le système mobile 70, représenté sur la figure 7, le boîtier monobloc étanche 12, comportant les moyens de traitement de données, est disposé à l'intérieur du mat incliné 11 creux et étanche. Le mât incliné 11 comporte au niveau du boîtier 12 au moins une paroi permettant un échange thermique avec l'extérieur et réalisant une dissipation de la chaleur générée par les moyens de traitement thermique.

Le système 70 comporte un ensemble monobloc 71 comportant une partie horizontale 72 revenant vers l'utilisateur et intégrant le clavier 14. Le clavier 14 est intégré dans l'épaisseur de la partie horizontale 72.

L'ensemble monobloc 70 comporte également une partie inclinée 73 présentant une inclinaison plus forte que le mât incliné par rapport à l'axe verticale AV et comportant une surface de projection 74. Cet ensemble monobloc 71 est fixé sur le mât incliné 11.

Par ailleurs, le mât incliné 11 comporte en sa partie supérieure et derrière la partie inclinée 73 de l'ensemble monobloc 71, une partie inclinée 111 présentant une inclinaison plus forte que le mât incliné 11 vers l'arrière par rapport à l'axe verticale AV. Cette partie inclinée 111 du mât 11 présente sensiblement la même inclinaison que la partie inclinée 73 de l'ensemble monobloc 71 fixé à l'avant du mât. Des moyens de projection d'images 75 sont disposés sur la face avant de la partie inclinée 111 du mat 11. Les moyens de projection 75 sont dirigés vers la surface de projection 75 sur laquelle les images sont affichées. La connexion entre les moyens de projection 75 et le boîtier 12 est réalisée par des câbles circulant à l'intérieur du mât creux 11.

Dans ce mode de réalisation, la surface de projection et le clavier forment un ensemble monobloc. La surface de projection est encore plus simple à nettoyer.

Dans tous les modes de réalisation ou les moyens de saisie, et plus particulièrement le clavier, sont intégrés dans l'épaisseur d'un plan de travail, au moins une partie d'un câble de connexion de ce clavier à une source d'énergie ou au boîtier 12 peut aussi être intégrée dans l'épaisseur de ce plan de travail.

La figure 8 donne une représentation schématique de la partie basse du mât incliné 11 sans le capot étanche et lisse 16.

Deux batteries 61 sont disposées au niveau de la partie basse du mât incliné 11. Le système selon l'invention comprend un indicateur 81 de l'état de charge des batteries 61.

Le nombre de batteries est donné à titre d'exemple non limitatif.

Les batteries 61 peuvent être de batteries plomb ou des batteries Lion.

Les batteries 61 peuvent être chargées soit directement sur le système selon l'invention par une connexion étanche sur une alimentation électrique sous la forme par exemple d'une prise étanche, soit indépendamment du système selon l'invention. Dans ce dernier cas, les batteries 61 sont enlevées du système, après avoir enlevé le capot étanche 16, puis chargées et remises sur le système.

Les batteries 61 peuvent être disposées dans un coffret étanche, par exemple en acier inoxydable ou en un matériau de synthèse, doté d'une poignée et amovible. Un tel coffret est alors muni de prise de connexion électrique étanche.

Dans tous ces modes de réalisation, le système selon l'invention présente une étanchéité suffisante pour un nettoyage par aspersion voire un nettoyage à grande eau, ce qui permet de faciliter et d'améliorer le nettoyage du système selon l'invention et de l'utiliser sans risque de contamination dans des milieux répondant à des normes d'hygiène ou de contamination.

Bien sûr, l'invention n'est pas limitée aux exemples qui viennent d'être décrits et de nombreux aménagements peuvent être apportés à ces exemples sans sortir du cadre de l'invention.

## Revendications

1. Système (10,40,60,70) de traitement d'informations pour la saisie et/ou la consultation de données comprenant des moyens de roulement rendant ledit système mobile, destiné à être utilisé dans un milieu répondant à des normes d'hygiène ou de contamination, ledit système (10,40,60,70) comprenant :
- des moyens d'affichage (13 ;74,75),
- des moyens de saisie (14),
- des moyens de traitement de données,
ledit système (10,40,60,70) étant **caractérisé en ce que** les moyens de traitement de données sont disposés dans un boîtier monobloc étanche (12).

2. Système (10,40,60,70) selon la revendication 1, **caractérisé en ce que** le boîtier monobloc étanche (12) comporte au moins une paroi (121-124) réalisant une dissipation de la chaleur depuis l'intérieur dudit boîtier (12) vers l'extérieur.

3. Système (10,40,60,70) selon l'une quelconque des revendications précédentes, **caractérisé en ce que** le boîtier (12) comporte au moins un moyen de ventilation réalisant la circulation d'au moins une partie de la chaleur à l'intérieur dudit boîtier (12) vers au moins une paroi (121-124) dudit boîtier (12) réalisant une dissipation de ladite chaleur vers l'extérieur.

4. Système (10,40,60,70) selon l'une quelconque des revendications précédentes, **caractérisé en ce que** les moyens d'affichages (13) sont intégrés dans une paroi externe du boîtier monobloc (12) de sorte que l'ensemble boîtier (12) + moyens d'affichages (13) forment un ensemble monobloc étanche.

5. Système (10,40,60,70) selon l'une quelconque des revendications précédentes, **caractérisé en ce que** les moyens d'affichage (13) et les moyens de saisie (14) forment un ensemble monobloc étanche (71).

6. Système (10,40,60,70) selon l'une quelconque des revendications précédentes, **caractérisé en ce que** les moyens d'affichage (13) comprennent un écran tactile.

7. Système (10,40,60,70) selon l'une quelconque des revendications 1 à 5, **caractérisé en ce que** les moyens d'affichage comprennent un écran de projection (74) sur lequel sont projetées les images à afficher par des moyens de projection (75).

8. Système (10,40,60,70) selon l'une quelconque des revendications précédentes, **caractérisé en ce qu'**il comprend en outre un mât (11) incliné et étanche auquel est fixé :
- le boîtier monobloc (12),
- les moyens de saisie (14), et/ou
- les moyens d'affichage (13).

9. Système (10,40,60,70) selon la revendication 8, **caractérisé en ce que** le mât (11) est agencé pour recevoir en interne des câbles de connexion électrique entre des moyens de stockage d'énergie électrique (61) disposés sensiblement au pied du mât (11) et le boîtier monobloc étanche (12).

10. Système (10,40,60,70) selon l'une quelconque des revendications 8 ou 9, **caractérisé en ce qu'**au moins une partie du mât incliné (11) forme au moins une partie du boîtier étanche (12).

11. Système (10,40,60,70) selon l'une quelconque des revendications précédentes, **caractérisé en ce que** le boîtier monobloc étanche (12) comporte au moins un port de connexion (125) étanche, ledit au moins un port de connexion (125) servant à la connexion avec :
- les moyens de saisie (14),
- les moyens d'affichage (13),
- des moyens de stockage d'énergie (61), et/ou
- d'un appareil externe.

12. Système (10,40,60,70) selon l'une quelconque des revendications précédentes, **caractérisé en ce qu'**il comporte un plan de travail (15), au moins une partie des moyens de saisie (14) étant intégrés audit plan de travail (15).

13. Système (10,40,60,70) selon l'une quelconque des revendications précédentes, **caractérisé en ce que** les moyens de saisie (14) comprennent un clavier tactile.

14. Système (10,40,60,70) selon l'une quelconque des revendications précédentes, **caractérisé en ce qu'**il comprend en outre au moins une batterie (61) alimentant les différents éléments dudit système (10,40,60,70).

15. Utilisation du système (10,40,60,70) selon l'une quelconque des revendications précédentes dans un site médical.

16. Utilisation du système (10,40,60,70) selon l'une quelconque des revendications précédentes dans une salle blanche.
